# EUROPÄISCHE PATENTSCHRIFT

(11) **EP 1 682 366 B1**
(45) Veröffentlichungstag und Bekanntmachung des Hinweises auf die Patenterteilung: **14.01.2009**
(21) Anmeldenummer: 04765241.7
(22) Anmeldetag: 15.09.2004
(51) Int. Cl.: B60H 1/00

(54) **KLAPPE, INSBESONDERE FÜR EIN KRAFTFAHRZEUG-BELÜFTUNGSSYSTEM**
FLAP, PARTICULARLY FOR A MOTOR VEHICLE VENTILATION SYSTEM
VOLET, DESTINE EN PARTICULIER A UN SYSTEME DE VENTILATION DE VEHICULE AUTOMOBILE

(30) Priorität: 27.10.2003 DE 10350234
(43) Veröffentlichungstag der Anmeldung: 26.07.2006
(73) Patentinhaber: Behr GmbH & Co. KG, 70469 Stuttgart (DE)
(72) Erfinder: OTTO, Jürgen, 75428 Illingen (DE); SCHMADL, Dieter, 71672 Marbach (DE); VOIGT, Klaus, 74321 Bietigheim-Bissingen (DE)
(74) Vertreter: Grauel, Andreas
(86) Internationale Anmeldenummer: PCT/EP2004/010331
(87) Internationale Veröffentlichungsnummer: WO 2005/051690

(56) Entgegenhaltungen:
- EP-A- 0 598 942
- DE-A- 4 343 367
- DE-A- 19 814 953
- DE-U- 8 705 895
- US-A- 5 722 884
- US-A1- 2001 014 582

## Beschreibung

Die Erfindung betrifft eine Klappe, insbesondere für ein Kraftfahrzeug-Belüftungssystem, gemäß dem Oberbegriff des Anspruchs 1.

Es ist eine Vielzahl von Klappen aus Kunststoff, Metall oder aus einem Verbund unterschiedlicher Materialien bekannt. Bei derartigen Klappen treten häufig Abdichtungsprobleme auf.

Die Druckschrift EP 0 598 942 A1 offenbart eine Luftklappe mit einer elastischen Dichtleiste

Es ist Aufgabe der Erfindung, eine verbesserte Klappe zur Verfügung zu stellen.

Diese Aufgabe wird gelöst durch eine Klappe, insbesondere für ein Kraftfahrzeug-Belüftungssystem, mit den Merkmalen des Anspruchs 1. Vorteilhafte Ausgestaltungen sind Gegenstand der Unteransprüche.

Erfindungsgemäß ist eine Klappe, insbesondere für ein Kraftfahrzeug-Belüftungssystem, vorgesehen, die um eine Schwenkachse verschwenkbar und im geschlossenen Zustand in Anlage an einer Luftkanal-Wandung ist, wobei die Klappe zumindest einen elastisch ausgebildeten äußeren Rand aufweist, der sicherstellt, dass im geschlossenen Zustand der Klappe kein Spalt zwischen der Klappe und der Luftkanal-Wandung vorhanden ist und somit keine Luft durch einen Spalt zwischen der Klappe und der Luftkanal-Wandung strömt. Ferner ist die Klappe derart ausgelegt, dass nur relativ geringe Betätigungskräfte erforderlich sind, weshalb kleinere und leichtere Antriebe verwendet werden können, so dass auch der Bauraumbedarf verringert werden kann. Durch die entsprechende Auslegung der Klappen können zudem störende Geräusche vermieden werden. Der elastisch ausgebildete äußere Rand ermöglicht zudem-eine größere Toleranz auch in Hinblick auf Ungleichmäßigkeiten der Luftkanal-Wandung.

Die Klappe weist außerdem ein Hohlprofil auf, das den äußeren Rand der Klappe bildet und von außen auf den Klappenkörper aufgesetzt ist, wobei zwischen dem Hohlprofil und dem außen gegabelt ausgebildeten Klappenkörper ein elastisches Element vorgesehen ist, das das Hohlprofil im geschlossenen Zustand der Klappe federnd gegen die Luftkanal-Wandung presst. Das elastische Element kann beispielsweise durch einen Schaumstoffstreifen oder Federn gebildet sein.

Gemäß einer ersten Ausführungsform ist nicht nur der äußere Bereich der Klappe elastisch ausgebildet, sondern die gesamte Klappe besteht aus einem elastischen Material, das jedoch ausreichend fest ist, um eine Verformung in Folge der durchströmenden Luft zu verhindern.

Die Klappe liegt vorzugsweise im geschlossenen Zustand an einem Bereich der Luftkanal-Wandung an, in dem eine Querschnittsänderung des Luftkanals vorgesehen ist. Dabei kann die Querschnittsänderung allmählich, bspw. in einem Winkel von 45°, oder durch eine Stufe erfolgen.

Gemäß einer zweiten Ausführungsform ist die Klappe als Hohlkörper ausgebildet, wobei der Hohlkörper zumindest im Bereich des äußeren Randes elastisch verformbar ist, so dass er an der Luftkanal-Wandung abdichtend anliegen kann. Dabei hat der Hohlkörper bevorzugt einen elliptischen Querschnitt.

Im Folgenden wird die Erfindung anhand von acht Ausführungsbeispielen unter Bezugnahme auf die Zeichnung im Einzelnen erläutert. In der Zeichnung zeigen:
- Fig. 1: einen Schnitt durch eine Klappe gemäß dem ersten Ausführungsbeispiel,
- Fig. 2: einen Schnitt durch eine Klappe gemäß dem zweiten Ausführungsbeispiel,
- Fig. 3: einen Schnitt durch eine Klappe gemäß einem nicht beanspruchten Ausführungsbeispiel,
- Fig. 4: einen Schnitt durch eine Klappe gemäß einem nicht beanspruchen Ausführungsbeispiel,
- Fig. 5: einen Schnitt durch eine Klappe gemäß einem nicht beanspruchten Ausführungsbeispiel,
- Fig. 6: einen Schnitt durch eine Klappe gemäß einem nicht beanspruchten Ausführungsbeispiel,
- Fig. 7: einen Schnitt durch eine Klappe gemäß dem Ausführungsbeispiel, und
- Fig. 8: einen Schnitt durch eine Klappe gemäß einem nicht beanspruchten Ausführungsbeispiel,

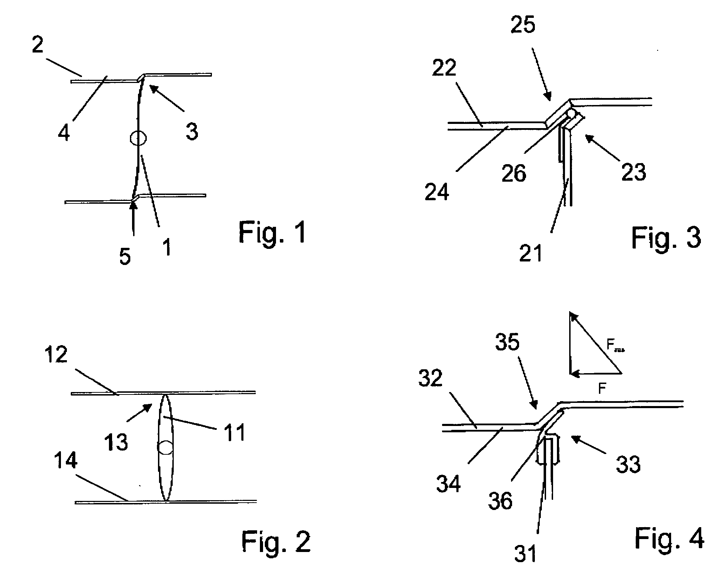

Eine Klappe 1, wie in Fig. 1 dargestellt, welche in einem Luftkanal 2 eines Belüftungssystems eines Kraftfahrzeugs angeordnet ist, das auch eine Klimaanlage umfasst, ist um eine Schwenkachse verschwenkbar ausgebildet und liegt mit ihrem äußeren Rand 3 an der Luftkanal-Wandung 4 an. Dabei weist der Luftkanal 2 eine Querschnittsänderung auf, die einen Absatz 5 in der Luftkanal-Wandung 4 bildet, an der der äußere Rand 3 mit Druck anliegt. Der Absatz 5 verläuft in einem Winkel von etwa 45° bezüglich der Längsachse des Luftkanals 2. Die Klappe 1 hat dabei ein degressiv ausgelegtes Widerstandsmoment, so dass eine gleichmäßige Betätigungskraft über den Verstellweg erforderlich ist.

Durch den Druck in Folge des Verschwenkens der Klappe 1 verformt sich die elastisch ausgebildete Klappe 1 bei Anlage an den Absatz 5 der Luftkanal-Wandung, so dass sie in ihrem äußeren Bereich, insbesondere dem, wie auch die restliche Klappe 1 elastisch ausgebildeten äußeren Rand 3, auch schräg bezüglich der Längsachse des Luftkanals 2 verläuft, je nach Elastizität der Klappe 1 kann die Schräge der Klappe 1 im äußeren Bereich sich an die Schräge des Absatzes 5 annähern.

Gemäß dem zweiten, in Fig. 2 dargestellten Ausführungsbeispiel, ist die Klappe 11 als dünnwandiger, mittig gelagerter Hohlkörper ausgebildet, welcher in Folge seiner Hohlform eine gewisse Elastizität aufweist, so dass sich die Klappe 11 bei Anlage mit dem äußeren Rand 13 an die Luftkanal-Wandung 14 elastisch verformt, wodurch die Klappe 11 dicht an der Luftkanal-Wandung 14 anliegt. Ein Absatz ist hierbei im Luftkanal 12 nicht vorgesehen.

Gemäß dem in Fig. 3 dargestellten Ausführungsbeispiel ist ein den äußeren Rand 23 der Klappe 21 bildendes Dichtlippen-Profil 26 vorgesehen, das an einem Absatz 25 des Luftkanals 22 an der Luftkanal-Wandung 24 anliegt. Hierbei ist das Dichtlippen-Profil 26 elastisch ausgebildet und an der Klappe 21 angebracht. Der äußere Rand 23 der Klappe 21 verläuft hierbei in einer schrägen Richtung, entsprechend dem Absatz 25 des Luftkanals 22. Das Dichtlippen-Profil 26 weist einen insbesondere der Verbindung zwischen der Klappe 21 und dem Dichtlippen-Profil 26 dienenden, flachen Bereich und einen schnurartig ausgebildeten Endbereich, welcher am äußersten Ende vorgesehen ist.

Die Klappe 31 gemäß dem, in Fig. 4 dargestellten Ausführungsbeispiel weist ein Dichtlippen-Profil 36 auf, welches den äußeren Rand 33 der Klappe 31 bildet, wofür es auf den Klappenkörper aufgesetzt und mit ihn fest verbunden ist. Das Dichtlippen-Profil 36 weist hierfür eine durchgehende Nut auf. Auf der der Nut gegenüberliegenden Seite weist das Dichtlippen-Profil 36 eine sich in Fortsetzung der Klappe 31 erstreckende Lippe auf. Das Dichtlippen-Profil 36 besteht aus einem elastischen Material, so dass sich die Lippe bei Anlage an den Absatz 35 des Luftkanals 32 elastisch verformt und dicht an der Luftkanal-Wandung 34 anliegt.

Sowohl beim Ausführungsbeispiele der Fig. 3 als Fig. 4 tritt eine gewisse Keilwirkung auf (siehe Kräftedreieck in Fig. 4), so dass die Anpresskraft reduziert und zugleich die Abdichtung verbessert wird. Durch einen Knick der Klappe im Bereich der Luftkanal-Wandung (z.B. Absatz mit 45°) wird die Anpresskraft in eine axiale und eine radiale Komponente aufgeteilt, wobei die radiale Komponente vergrößert wird (Keilwirkung). Eine zusätzliche Abdichtung, z.B. ein Schaumstoffstreifen, in diesem Bereich kann zudem eine Geräuschreduzierung bewirken.

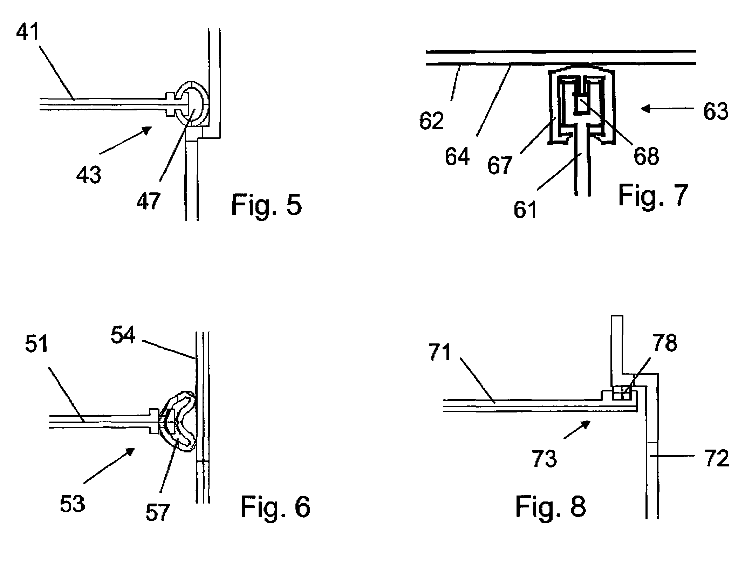

Gemäß den Ausführungsbeispiele der Fig 5 und Fig. 6 weisen die Klappen 41 und 51 ein mit Gas und/oder einer Flüssigkeit, welche die Dämpfung verbessert, gefülltes elastisches Hohlprofil 47 bzw. 57 auf, welches den äußeren Rand 43 bzw. 53 der Klappe 41 bzw. 51 bildet und auf den Klappenkörper aufgesetzt ist. Gemäß dem Ausführungsbeispiel der Fig. 5 ist das Hohlprofil 47 kreisförmig ausgebildet und liegt an einem Absatz 45 an. Das Hohlprofil 57 gemäß dem Ausführungsbeispiel der Fig 6 weist einen C-förmigen Querschnitt auf, wobei sich der Querschnitt zur Luftkanal-Wandung 54 hin öffnet. Gemäß diesem Ausführungsbeispiel ist kein Anschlag vorgesehen.

Das Hohlprofil 47 bzw. 57 kann angeclipst, nachträglich angespritzt, mittels 2-Komponenten-Spritzgießen angespritzt oder auf andere Weise angebracht sein. Eine besonders gute Abdichtung kann durch das gezielte Einbringen einer Flüssigkeit an relevanten Stellen erfolgen.

In Fig. 7 ist der äußere Rand 63 einer Klappe 61 gemäß dem Ausführungsbeispiel dargestellt, der an die Luftkanal-Wandung 64 des Luftkanals 62 anliegt. Hierbei bildet ein Hohlprofil 67 den äußeren Rand 63 und ist von außen auf den Klappenkörper aufgesetzt, wobei zwischen dem Hohlprofil 67 und dem außen gegabelt ausgebildeten Klappenkörper ein elastisches Element 68 vorgesehen ist, welches das Hohlprofil 67 federnd gegen die Luftkanal-Wandung 64 presst. Beim elastischen Element 68 kann es sich um einen Elastomer-Streifen handeln, jedoch können beispielsweise auch Federn vorgesehen sein. Das elastische Element 68 bewirkt zudem einen Toleranzausgleich in radialer oder axialer Richtung. Ist das elastische Element 68 schräg eingebaut, so kann mit einem einzigen elastischen Element 68 der Toleranzausgleich in radialer und axialer Richtung erfolgen. Das Hohlprofil 67 kann dabei als Kunststoffteil mit angespritztem elastischen Element 68 ausgebildet sein.

Gemäß dem in Fig. 8 dargestellten, Ausführungsbeispiel ist an der Klappe 71 am äußeren Rand 73 des Klappenkörpers seitlich ein Dichtstreifen 78 vorgesehen, der elastisch ausgebildet ist. Dieser Dichtstreifen 78 kann schaumstoffartig ausgebildet sein, wobei er am Klappenkörper angeklebt oder direkt darauf angeschäumt sein kann, beispielsweise mittels eines Auftragens eines nach dem Auftragen aufschäumenden Materials. Der Dichtstreifen 78 liegt im geschlossenen Zustand der Klappe 71 an einem Absatz 75, der im Luftkanal 72 ausgebildet ist, an.

### Bezugszeichenliste

- 1, 11, 21, 31, 41, 51, 61, 71: Klappe
- 2, 12, 22, 32, 62, 72: Luftkanal
- 3, 13, 23, 33, 43, 53, 63, 73: äußerer Rand
- 4, 14, 24, 34, 54, 64: Luftkanal-Wandung
- 5, 25, 35: Absatz
- 26, 36: Dichtlippen-Profil
- 47, 57, 67: Hohlprofil
- 68: elastisches Element
- 79: Dichtstreifen

## Patentansprüche

1. Klappe, insbesondere für ein Kraftfahrzeug-Belüftungssystem, die um eine Schwenkachse verschwenkbar und im geschlossenen Zustand in Anlage an einer Luftkanal-Wandung ist, wobei die Klappe (1; 11; 21; 31; 41; 51; 61; 71) zumindest einen elastisch ausgebildeten äußeren Rand (3; 13; 23; 33; 43; 53; 63; 73) aufweist**dadurch gekennzeichnet, dass** die Klappe (61) ein Hohlprofil (67) umfasst, das den äußeren Rand (63) der Klappe (61) bildet und von außen auf den Klappenkörper aufgesetzt ist, wobei zwischen dem Hohlprofil (67) und dem außen gegabelt ausgebildeten Klappenkörper ein elastisches Element (68) vorgesehen ist, das das Hohprofil (67) im geschlossenen Zustand der Klappe (61) federnd gegen die Luftkanal-Wandung (64) presst.

2. Klappe nach Anspruch 1, **dadurch gekennzeichnet, dass** die Klappe (1) elastisch ausgebildet ist.

3. Klappe nach Anspruch 1 oder 2, **dadurch gekennzeichnet, dass** die Klappe (1) im geschlossenen Zustand an einem Bereich der Luftkanal-Wandung anliegt, in dem eine Querschnittsänderung des Luftkanals vorgesehen ist.

4. Klappe nach einem der vorhergehenden Ansprüche, **dadurch gekennzeichnet, dass** die Klappe (11) als Hohlkörper ausgebildet ist, wobei der Hohlkörper zumindest im Bereich des äußeren Randes (13) elastisch verformbar ist.

5. Klappe nach Anspruch 4, **dadurch gekennzeichnet, dass** die Klappe (11) einen elliptischen Querschnitt aufweist.

6. Kraftfahrzeug-Belüftungssystem **gekennzeichnet durch** eine Klappe (1; 11; 21; 31; 41; 51; 61; 71) gemäß einem der Ansprüche 1 bis 5.

## Claims

1. Flap, in particular for a motor vehicle ventilation system, which is pivotable about a pivot axis and, in the closed state, bears against an air duct wall, the flap (1; 11; 21; 31; 41; 51; 61; 71) having at least one elastic outer edge (3; 13; 23; 33; 43; 53; 63; 73), **characterised in that** the flap (61) includes a hollow section (67) which forms the outer edge (63) of the flap (61) and is fitted to the flap body from the outside, wherein an elastic element (68) which in the closed state of the flap (61) presses the hollow section (67) resiliently against the air duct wall (64) is provided between the hollow section (67) and the externally forked flap body.

2. Flap according to claim 1, **characterised in that** the flap (1) is designed elastic.

3. Flap according to claim 1 or 2, **characterised in that** the flap (1) in its closed state bears against a region of the air duct wall where the cross-section of the air duct changes.

4. Flap according to any of the preceding claims, **characterised in that** the flap (1) is designed as a hollow body, the hollow body being capable of elastic deformation at least in the region of the outer edge.

5. Flap according to claim 4, **characterised in that** the flap (11) has an elliptical cross-section.

6. Motor vehicle ventilation system, **characterised by** a flap (1; 11; 21; 31; 4J ; 51; 61; 71) according to any of claims 1 to 5.

## Revendications

1. Volet, en particulier pour un système de ventilation d'un véhicule automobile, volet qui est pivotant autour d'un axe de pivotement et, lorsqu'il est fermé, vient en appui sur une paroi d'un conduit d'air, où le volet (1 ; 11 ; 21 ; 31 ; 41 ; 51 ; 61 ; 71), présente au moins un bord extérieur (3 ; 13 ; 23 ; 33 ; 43 ; 53 ; 63 ; 73) configuré de façon élastique,
**caractérisé en ce que** le volet (61) comporte un profilé creux (67) qui forme le bord extérieur (63) du volet (61) et est placé, de l'extérieur, sur le corps du volet, où il est prévu, entre le profilé creux (67) et le corps du volet configuré de façon fourchue vers l'extérieur, un élément élastique (68) qui, lorsque le volet (61) est fermé, comprime le profilé creux (67) contre la paroi (64) du conduit d'air en faisant ressort.

2. Volet selon la revendication 1, **caractérisé en ce que** le volet (1) est configuré de façon élastique.

3. Volet selon la revendication 1 ou 2, **caractérisé en ce que** le volet (1), lorsqu'il est fermé, vient en appui sur une zone de la paroi du conduit d'air, zone dans laquelle il est prévu une modification de la section du conduit d'air.

4. Volet selon l'une quelconque des revendications précédentes, **caractérisé en ce que** le volet (11) est configuré comme un corps creux, où le corps creux est déformable élastiquement au moins dans la zone du bord extérieur (13).

5. Volet selon la revendication 4, **caractérisé en ce que** le volet (11) présente une section elliptique.

6. Système de ventilation d'un véhicule **caractérisé par** un volet (1 ; 11 ; 21 ; 31 ; 41 ; 51 ; 61 ; 71) conformément à l'une quelconque des revendications 1 à 5.
